# EUROPÄISCHE PATENTSCHRIFT

(11) **EP 1 266 276 B1**
(45) Veröffentlichungstag und Bekanntmachung des Hinweises auf die Patenterteilung: **01.02.2006**
(21) Anmeldenummer: 01916894.7
(22) Anmeldetag: 01.03.2001
(51) Int. Cl.: G06F 1/16

(54) **TRAGBARES COMPUTERSYSTEM**
PORTABLE COMPUTER SYSTEM
SYSTEME INFORMATIQUE PORTABLE

(30) Priorität: 21.03.2000 DE 10013862
(43) Veröffentlichungstag der Anmeldung: 18.12.2002
(73) Patentinhaber: Fujitsu Siemens Computers GmbH, 80807 München (DE)
(72) Erfinder: KORNMAYER, Ingbert, 86159 Augsburg (DE)
(74) Vertreter: Epping - Hermann - Fischer
(86) Internationale Anmeldenummer: PCT/DE2001/000774
(87) Internationale Veröffentlichungsnummer: WO 2001/071465

(56) Entgegenhaltungen:
- EP-A- 0 788 172
- WO-A-00/35032

## Beschreibung

Die Erfindung betrifft ein tragbares Computersystem (Notebook).

Tragbare Computersysteme sind weithin bekannt. Tragbare Computersysteme weisen eine im Wesentlichen quaderförmige Haupteinheit auf, sowie eine daran befestigte, schwenkbare Anzeigeeinheit. Die Haupteinheit weist an ihrer Oberseite eine Tastatur zur Dateneingabe auf. Die Anzeigeeinheit, welche im Wesentlichen quaderförmig ist, weist an ihrer der Haupteinheit zugewandten Seite einen Flachbildschirm auf, beispielsweise ein TFT-Display. Tragbare Computersysteme sind insofern integriert, als sie üblicherweise Dateneingabe-Geräte (Tastatur, Maus), Anzeigegeräte (Monitor, Display), Recheneinheit, permanente und flüchtige Speicher aufweisen, welche in einem Gerät integriert sind.

Zur Energieversorgung eines tragbaren Computersystems sind neben der Möglichkeit, eine externe Stromzuführung mit Netzteil zu benutzen, Batterien beziehungsweise Akkumulatoren vorgesehen.

Man unterscheidet zwei Arten von Batterien beziehungsweise Akkumulatoren: Primärbatterien sind nicht wiederaufladbar und deshalb ist ihre Benutzung unwirtschaftlich, mit hohen Kosten sowie Umweltbelastungen verbunden. Sekundärbatterien sind mit einem Ladegerät wiederaufladbar, da sie jedoch eine begrenzte Kapazität aufweisen, ist ein netzunabhängiger Betrieb nur zirka zwei bis vier Stunden möglich. Sekundärbatterien sind beispielsweise als Nickel-Cadmium (NiCd), Nickel-Metallhydrid (NiMH)- oder Lithium-Ionen (LiIon)-Batterien bekannt. Insbesondere aufgrund der kurzen Betriebszeiten, welche mit Sekundärbatterien pro Ladezyklus möglich sind, haben dazu geführt, nach alternativen Energieversorgungskonzepten zu suchen.

Tragbare Computersysteme (Notebooks) weisen üblicherweise zwei Moduleinbauplätze auf. In diese Moduleinbauplätze sind Module einschiebbar. In diesen Modulen sind entweder Sekundär-Batteriepacks oder zusätzliche Peripheriegeräte wie CD-ROM-Laufwerk, Diskettenlaufwerk, zusätzliche Festplatten etc. untergebracht. Dem Anwender wird hierdurch eine größtmögliche Flexibilität geboten.

Die Druckschrift US 5932365 gibt eine Brennstoffzelle zur Erzeugung elektrischer Energie an, welche beispielsweise für ein Notebook oder ein tragbares Telefon geeignet ist. Dabei reagiert in einem Tank gespeicherter Wasserstoff mit Luftsauerstoff in einer elektrochemischen Reaktion unter Freisetzung elektrischer Energie.

Eine weitere Brennstoffzelle ist aus EP-A-0 788 172 bekannt.

Um ein tragbares Computersystem zur elektrischen Energieversorgung mit einer Brennstoffzelle auszurüsten, muß einerseits die Brennstoffzelle selbst und andererseits ein Gasspeicher im Computersystem oder extern am Computersystem angeordnet werden. Bisher werden hierfür beide Moduleinbauplätze verwendet, nämlich ein Moduleinbauplatz für den Gasbehälter und der andere Moduleinbauplatz für die Brennstoffzelle. Im Gasbehälter kann Wasserstoff beispielsweise in fester Form in einem Hydridspeicher untergebracht sein. Diese Anordnung weist den Nachteil auf, daß die mit dem Modul-Prinzip angestrebte Flexibilität nicht mehr gegeben ist. Eine ebenfalls denkbare externe Anordnung von zumindest dem Gasbehälter oder der Brennstoffzelle ist ebenfalls unhandlich.

Der vorliegenden Erfindung liegt die Aufgabe zugrunde, ein tragbares Computersystem mit Energieversorgung mittels einer Brennstoffzelle anzugeben, bei dem die Raumausnutzung verbessert ist.

Erfindungsgemäß wird die Aufgabe mit einem tragbaren Computersystem mit einer Haupteinheit und einer Anzeigeeinheit gelöst, wobei die Anzeigeeinheit eine Brennstoffzelle aufweist, die Haupteinheit einen Gasspeicher aufweist und die Brennstoffzelle mit dem Gasspeicher verbunden ist.

Ein tragbares Computersystem weist eine Haupteinheit auf, an deren Oberseite beispielsweise eine Tastatur zur Dateneingabe angeordnet sein kann, sowie eine Anzeigeeinheit, welche eine optische Datenausgabe mit einer optischen Anzeige ermöglicht. Die Anzeigeeinheit weist eine Brennstoffzelle auf, in der in einer elektrochemischen Reaktion elektrische Energie zur Stromversorgung des tragbaren Computersystems erzeugbar ist. Zur Stromerzeugung in einer Brennstoffzelle kann beispielsweise Wasserstoff-Gas mit Sauerstoff-Gas zu einer Reaktion gebracht werden. Die Haupteinheit des tragbaren Computersystems weist einen Gasspeicher auf, in dem beispielsweise Wasserstoff-Gas speicherbar ist. Der Wasserstoff muß dabei nicht notwendigerweise in gasförmigem Aggregatzustand gespeichert sein. Sofern die Brennstoffzelle für eine Reaktion von Wasserstoff und Sauerstoff vorgesehen ist, kann der Sauerstoff aus der Umgebungsluft entnehmbar sein. Zwischen Gasspeicher und Brennstoffzelle besteht eine Verbindung. Mit dieser Verbindung ist der im Gasspeicher gespeicherte Stoff der Brennstoffzelle zuführbar. Die beschriebene Anordnung gewährleistet eine räumliche Trennung von Brennstoffzelle und Gasspeicher. Da die Brennstoffzelle nicht in der Haupteinheit angeordnet ist, ist in der Haupteinheit eine bessere und flexiblere Raumausnutzung möglich.

Als Alternative zur Verwendung von Wasserstoff als Brennstoff für die Brennstoffzelle sind auch andere geeignete Stoffe, wie beispielsweise Methanol, einsetzbar.

Die Brennstoffzelle kann zur Spannungsanpassung beziehungsweise -erhöhung aus mehreren Einzelzellen gebildet sein.

Die Speicherung des Wasserstoffs im Gasspeicher kann reversibel sein, so daß der Gasspeicher wiederaufladbar ist.

Zum Aufladen des Gasspeichers ist die Verwendung eines Ladegerätes denkbar, in welchem in photovoltaischen Solarzellen erzeugter elektrischer Strom in einer Elektrolyse Wasser in Wasserstoff und Sauerstoff aufspaltet. Die beschriebene Anordnung ist energetisch vollständig autark und ermöglicht eine praktisch unbegrenzte Nutzungsdauer beziehungsweise Betriebszeit.

In einer vorteilhaften Ausführungsform der vorliegenden Erfindung ist der Gasspeicher in einem Modul angeordnet, welches in einen Moduleinbauplatz in der Haupteinheit einschiebbar ist. Hierdurch kann zum Wiederaufladen beziehungsweise Befüllen des Gasspeichers derselbe aus dem tragbaren Computersystem herausgenommen und durch einen aufgeladenen Gasspeicher ersetzt werden. Hierdurch ist eine Verlängerung der ohnehin mit Brennstoffzellen deutlich längeren Betriebszeit möglich, ohne an einer Ladestation den Gasspeicher aufladen zu müssen. Durch Beibehaltung des Modulkonzepts, welches zur Verwendung von Sekundärbatterien weit verbreitet ist, sind lediglich geringfügige Anpassungen an die Raumaufteilung beziehungsweise den Herstellungsprozeß des Computersystems erforderlich. Die Beibehaltung des Modulkonzepts, beispielsweise mit zwei Moduleinbauplätzen in einem tragbaren Computersystem, erlaubt außerdem die Beibehaltung beziehungsweise Erweiterung der Ergonomie für den Anwender, da weiterhin CD-ROM-, Disketten- oder Festplatten-Laufwerks-Einschübe verwendbar sind.

In einer weiteren, vorteilhaften Ausführungsform der vorliegenden Erfindung ist die Brennstoffzelle großflächig ausgeführt und parallel zu einer flachen optischen Anzeige in der Anzeigeeinheit angeordnet. Die flache Ausführung der Anzeigeeinheiten wird durch die ebenfalls flache, großflächig ausgeführte, und parallel zur optischen Anzeige beziehungsweise dem Bildschirm angeordnete Brennstoffzelle beibehalten. Die optische Anzeige kann dabei beispielsweise ein LCD- oder TFT-Display sein. Die großflächige Ausführung der Brennstoffzelle ermöglicht einen guten Wirkungsgrad bei der Erzeugung der elektrischen Energie. Da Anzeigeeinheiten in einem Betriebszustand üblicherweise eine im wesentlichen senkrechte Lage im Raum haben, wird der Wärmeaustausch beziehungsweise die Abführung von Wärme durch die natürliche Konvektion in der Luft zusätzlich verbessert. Dies trägt zu einer weiteren Erhöhung des Wirkungsgrades bei.

In einer weiteren, vorteilhaften Ausführungsform der Erfindung ist die Anzeigeeinheit mit der Haupteinheit schwenkbar verbunden. Hierdurch kann in einem Betriebszustand die Anzeigeeinheit senkrecht aufgestellt werden und das Computersystem zum Transport flach zusammengeklappt werden.

In einer weiteren, vorteilhaften Ausführungsform der vorliegenden Erfindung ist der Gasspeicher ein Hydridspeicher, in welchem Wasserstoff reversibel speicherbar ist.

In einer weiteren, vorteilhaften Ausführungsform der vorliegenden Erfindung ist zwischen der Brennstoffzelle und der optischen Anzeige in der Anzeigeeinheit eine thermisch isolierende Schicht angeordnet, um in der Brennstoffzelle entstehende Wärme von der optischen Anzeige fernzuhalten.

Zur Verbesserung des Wärmeaustauschs kann die Anzeigeeinheit Kühlrippen aufweisen. Ein Gehäuse der Anzeigeeinheit, in welchem die Brennstoffzelle angeordnet sein kann, kann Öffnungen aufweisen, um die Brennstoffzelle mit Sauerstoff versorgbar zu gestalten, welcher mit Wasserstoff zur Reaktion gebracht werden kann.

Zur Verbesserung dieser Sauerstoffversorgung können zusätzliche Lüfter am Gehäuse der Anzeigeeinheit vorgesehen sein.

Die Verbindung zwischen Gasspeicher und Brennstoffzelle beziehungsweise zwischen Haupteinheit und daran schwenkbar befestigter Anzeigeeinheit kann zumindest teilweise in der Schwenkachse verlaufen.

Weitere Einzelheiten der Erfindung sind in den Unteransprüchen angegeben.

Die Erfindung wird nun an einem Ausführungsbeispiel anhand der Zeichnungen näher erläutert.

Es zeigen:
- Figur 1: Ein tragbares Computersystem mit aufgeklappter Anzeigeeinheit in einer Seitenansicht,
- Figur 2: Die Haupteinheit des Computersystems in einem Querschnitt und
- Figur 3: Eine Draufsicht auf das Computersystem in zusammengeklapptem Zustand.

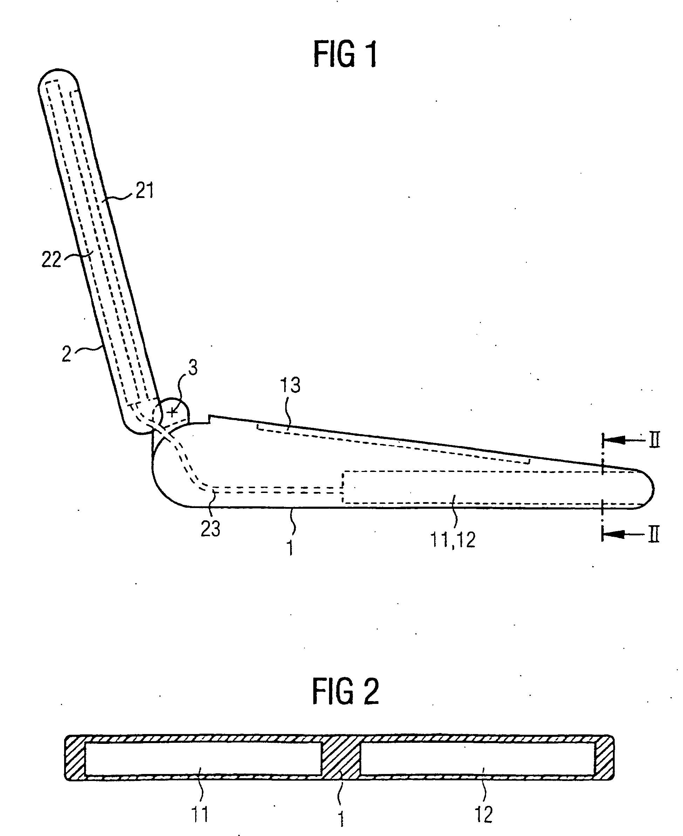

Figur 1 zeigt ein tragbares Computersystem mit einer Haupteinheit 1 und einer Anzeigeeinheit 2. Diese sind an einer Längskante schwenkbar miteinander verbunden. Bezüglich der Haupteinheit 1 ist die Anzeigeeinheit 2 um eine Achse 3 bewegbar. Zum Transport ist die Anzeigeeinheit umklappbar, während sie im Betriebszustand hochgeklappt wird. Die Haupteinheit weist neben einer Eingabe-Tastatur 13 zwei Moduleinbauplätze 11, 12 auf. Einer der beiden Moduleinbauplätze 11 ist über eine flexible, gasdichte Verbindung 23 mit der Brennstoffzelle 22 in der Anzeigeeinheit 2 verbunden. Diese Brennstoffzelle 22 ist von einem Anwender aus betrachtet hinter der optischen Anzeige 21 angeordnet. Notwendige Bestandteile eines Computersystems, wie Hauptplatine (Mainboard), Grafikkarte, Festplattenlaufwerk, flüchtiger Speicher (RAM), Prozessor (CPU, Central Processing Unit) etc. und deren Verbindungen sind nicht eingezeichnet.

Figur 2 zeigt die Haupteinheit gemäß Figur 1 in einem Querschnitt. Das beschriebene Computersystem weist zwei Moduleinbauplätze 11, 12 auf, welche von der dem Benutzer zugewandten Seite aus mit Einbaumodulen bestückbar sind.

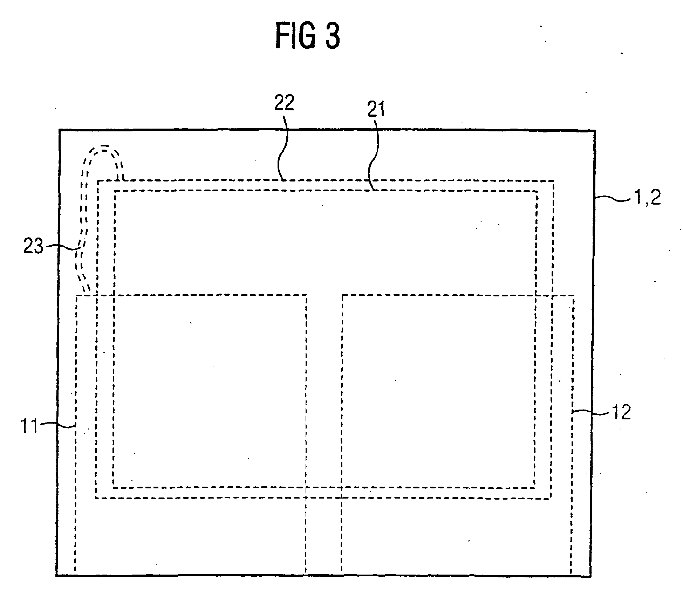

Figur 3 zeigt das tragbare Computersystem, bei dem die Anzeigeeinheit auf die Haupteinheit 1 umgeklappt ist. Es sind die Umrisse der optischen Anzeige 21 und der ebenfalls großflächig ausgeführten Brennstoffzelle 22 erkennbar. Letztere ist über eine gasdichte, flexible Verbindung 23 mit einem Moduleinbauplatz 11 verbunden beziehungsweise mit einem in die Moduleinheit einschiebbaren Gastank-Modul verbindbar. Die Haupteinheit weist außerdem einen zweiten Moduleinbauplatz 12 auf.

Die beiden Moduleinbauplätze 11, 12 sind in Figur 3 mit gleichen Abmessungen eingezeichnet, es ist jedoch denkbar, daß die Moduleinbauplätze für verschiedene Modultypen verschiedene Abmessungen aufweisen können. Beispielsweise können Batterie-Module oder Gasspeicher-Module andere Abmessungen aufweisen als Festplatten-Module, CD-ROM-Module oder DiskettenLaufwerk-Module.

Die Verwendung einer Brennstoffzelle 22 in Verbindung mit einem Gasspeicher ermöglicht gegenüber herkömmlichen Sekundärbatterien eine erheblich längere Betriebszeit zwischen zwei Ladezyklen. Gegenüber von Nickel-Cadmium-, Nickel-Metallhydrid- oder Lithium-Ionen-Sekundär-Batterien, welche lediglich Betriebszeiten von zwei bis vier Stunden zwischen zwei Ladezyklen ermöglichen, sind mit der beschriebenen Anordnung netzunabhängige Betriebe von zirka einer Woche realisierbar.

Die Anordnung der Brennstoffzelle 22 in der Anzeigeeinheit 2 führt dazu, daß zumindest ein Moduleinbauplatz 12 für weitere Moduleinschübe, wie beispielsweise CD-ROM-Laufwerke, frei bleibt. Dem Anwender steht hierdurch eine größtmögliche Flexibilität zur Verfügung. Wenn der Gasspeicher als Modul, welches in einen Moduleinbauplatz 11 einschiebbar ist, ausgeführt ist, so kann, wie bei Sekundär-Batterien bekannt, jeweils ein Energiespeicher aufgeladen und ein anderer zur Energieversorgung des Computersystems in einem Moduleinbauplatz 11 eingeschoben sein.

Sofern das Gasspeicher-Modul die gleichen Abmessungen wie ein herkömmlicher Sekundär-Batteriepack aufweist, kann das tragbare Computersystem sowohl mit herkömmlichen Akkumulatoren, als auch mit Brennstoffzelle und Gasspeicher betrieben werden. Hierfür ist selbstverständlich eine gasdichte, trennbare Kupplung zwischen der gasdichten Verbindung 23 und dem Gasspeicher-Modul vorzusehen.

Die großflächige Anordnung der Brennstoffzelle 22 in der Anzeigeeinheit 2 ermöglicht einen guten Wirkungsgrad der Energieumwandlung in der Brennstoffzelle, da eine große Fläche einen guten Wärme-Abtransport ermöglicht. Die natürliche Konvektion in der Umgebungsluft verbessert den Wirkungsgrad der Brennstoffzelle zusätzlich, denn im Betrieb ist die Anzeigeeinheit 2 im wesentlichen senkrecht angeordnet.

Bei besonders flacher Anordnung der Brennstoffzelle 22 hinter der Anzeigeeinheit 21 werden die Abmessungen derselben, insbesondere die Dicke der Anzeigeeinheit 2, nur geringfügig erhöht. Die beschriebene Anordnung mit Gasspeicher und Brennstoffzelle erfordert nur geringfügige Änderungen an einem Standard-Computersystem und ist deshalb in einfacher Weise und mit geringen Kosten realisierbar.

Da die mögliche Betriebsdauer des Computersystems vom Wirkungsgrad der Brennstoffzelle 22, dem Energiebedarf des Computersystems, sowie der Menge des speicherbaren Wasserstoffs abhängt, kann durch eine verbesserte Wasserstoffbindung in einem Gasspeicher, welcher beispielsweise ein Hydridspeicher sein kann, die Betriebsdauer verlängerbar.

Die beschriebene Anordnung ist nicht auf die Verwendung von Wasserstoff und Sauerstoff in einer Brennstoffzelle beschränkt. Beispielsweise ist der Einsatz von Methanol als Alternative zu Wasserstoff denkbar.

Die beschriebene Anordnung ist für ein tragbares Computersystem (Notebook, Laptop) angedacht. Das beschriebene Prinzip ist aber auch auf andere, tragbare elektronische Systeme, wie beispielsweise Organizer, anwendbar. Auch diese haben eine Haupteinheit und eine Anzeigeeinheit, welche schwenkbar an der Haupteinheit befestigt sein kann.

## Patentansprüche

1. Tragbares Computersystem mit einer Haupteinheit (1) und einer Anzeigeeinheit (2),
**dadurch gekennzeichnet, daß**
- die Anzeigeeinheit (2) eine Brennstoffzelle (22) aufweist,
- die Haupteinheit (1) einen Gasspeicher aufweist und
- der Gasspeicher mittels einer gasdichten Verbindung mit der Brennstoffzelle (22) verbindbar ist.

2. Tragbares Computersystem nach Anspruch 1,
**dadurch gekennzeichnet, daß**
ein Moduleinbauplatz (11) vorgesehen ist, in den der Gasspeicher einschiebbar ist.

3. Tragbares Computersystem nach Anspruch 1 oder 2,
**dadurch gekennzeichnet, daß**
die Brennstoffzelle (22) großflächig ausgeführt ist und parallel zu einer flachen optischen Anzeige (21) in der Anzeigeeinheit (2) angeordnet ist.

4. Tragbares Computersystem nach einem der Ansprüche 1 bis 3,
**dadurch gekennzeichnet, daß**
die Anzeigeeinheit (2) mit der Haupteinheit (1) um eine Achse (3) schwenkbar verbunden ist.

5. Tragbares Computersystem nach einem der Ansprüche 1 bis 4,
**dadurch gekennzeichnet, daß**
der Gasspeicher ein Hydridspeicher ist.

6. Tragbares Computersystem nach einem der Ansprüche 1 bis 5,
**dadurch gekennzeichnet, daß**
zwischen optischer Anzeige (21) und Brennstoffzelle (22) eine thermisch isolierende Schicht angeordnet ist.

7. Tragbares Computersystem nach einem der Ansprüche 1 bis 6,
**dadurch gekennzeichnet, daß**
die von der optischen Anzeige (21) abgewandte Seite der Anzeigeeinheit (2) Kühlrippen aufweist, welche mit der Brennstoffzelle (22) thermisch verbunden sind.

8. Tragbares Computersystem nach einem der Ansprüche 1 bis 7,
**dadurch gekennzeichnet, daß**
die Anzeigeeinheit (2) ein Gehäuse aufweist, welches Öffnungen hat, die mit der im Gehäuse angeordneten Brennstoffzelle (22) verbunden sind.

9. Tragbares Computersystem nach Anspruch 8,
**dadurch gekennzeichnet, daß**
die Anzeigeeinheit (2) Lüfter aufweist.

10. Tragbares Computersystem nach einem der Ansprüche 1 bis 9,
**dadurch gekennzeichnet, daß**
die Verbindung (23) von Brennstoffzelle (22) und Gasspeicher gasdicht und flexibel ist.

11. Tragbares Computersystem nach einem der Ansprüche 1 bis 10,
**dadurch gekennzeichnet, daß**
die Verbindung (23) von Brennstoffzelle (22) und Gasspeicher zumindest teilweise in einer Schwenkachse (3) zwischen Haupteinheit (1) und Anzeigeeinheit (2) verläuft.

## Claims

1. Portable computer system having a main unit (1) and a display unit (2),
**characterized in that**
- the display unit (2) has a fuel cell (22),
- the main unit (1) has a gas reservoir, and
- the gas reservoir can be connected to the fuel cell (22) by means of a gas-tight connection.

2. Portable computer system according to Claim 1,
**characterized in that**
a module installation space (11) is provided, into which the gas reservoir can be inserted.

3. Portable computer system according to Claim 1 or 2,
**characterized in that**
the fuel cell (22) has a large area and is arranged parallel to a flat optical display (21) in the display unit (2).

4. Portable computer system according to one of Claims 1 to 3,
**characterized in that**
the display unit (2) is connected to the main unit (1) such that it can pivot about an axis (3).

5. Portable computer system according to one of Claims 1 to 4,
**characterized in that**
the gas reservoir is a hydride reservoir.

6. Portable computer system according to one of Claims 1 to 5,
**characterized in that**
a thermally insulating layer is arranged between the optical display (21) and the fuel cell (22).

7. Portable computer system according to one of Claims 1 to 6,
**characterized in that**
**that** face of the display unit (2) which faces away from the optical display (21) has cooling ribs, which are thermally connected to the fuel cell (22) .

8. Portable computer system according to one of Claims 1 to 7,
**characterized in that**
the display unit (2) has a housing which has openings which are connected to the fuel cell (22) that is arranged in the housing.

9. Portable computer system according to Claim 8,
**characterized in that**
the display unit (2) has a fan or fans.

10. Portable computer system according to one of Claims 1 to 9,
**characterized in that**
the connection (23) between the fuel cell (22) and the gas reservoir is gas-tight and flexible.

11. Portable computer system according to one of Claims 1 to 10,
**characterized in that**
the connection (23) between the fuel cell (22) and the gas reservoir runs at least partially on a pivoting axis (3) between the main unit (1) and the display unit (2).

## Revendications

1. Système informatique portable comportant une unité (1) principale et une unité (2) d'affichage,
**caractérisé en ce que**
- l'unité (2) d'affichage comporte une pile (22) à combustible,
- l'unité (1) principale comporte une réserve de gaz, et
- la réserve de gaz peut être reliée à la pile (22) à combustible au moyen d'une liaison étanche au gaz.

2. Système informatique portable suivant la revendication 1,
**caractérisé en ce qu'**il est prévu un emplacement (11) d'insertion de module, dans lequel la réserve de gaz peut être insérée.

3. Système informatique portable suivant la revendication 1 ou 2,
**caractérisé en ce que** la pile (22) à combustible est réalisée à grande surface et est disposée parallèlement à un affichage (21) optique plat dans l'unité (2) d'affichage.

4. Système informatique portable suivant l'une des revendications 1 à 3,
**caractérisé en ce que** l'unité (2) d'affichage est reliée à l'unité (1) principal en pouvant basculer par rapport à un axe (3).

5. Système informatique portable suivant l'une des revendications 1 à 4,
**caractérisé en ce que** la réserve de gaz est une réserve d'hydrures.

6. Système informatique portable suivant l'une des revendications 1 à 5,
**caractérisé en ce qu'**il est disposé une couche isolante du point de vue thermique entre l'affichage (21) optique et la pile (22) à combustible.

7. Système informatique portable suivant l'une des revendications 1 à 6,
**caractérisé en ce que** le côté de l'unité (2) d'affichage éloigné de l'affichage (21) optique comporte des nervures de refroidissement, qui sont reliées du point de vue thermique à la pile (22) à combustible.

8. Système informatique portable suivant l'une des revendications 1 à 7,
**caractérisé en ce que** l'unité (2) d'affichage comporte un boîtier qui a des ouvertures qui communiquent avec la pile (22) à combustible montée dans le boîtier.

9. Système informatique portable suivant la revendication 8,
**caractérisé en ce que** l'unité (2) d'affichage comporte des ventilateurs.

10. Système informatique portable suivant l'une des revendications 1 à 9,
**caractérisé en ce que** la liaison (23) de la pile (22) à combustible et de la réserve de gaz est étanche au gaz et souple.

11. Système informatique portable suivant l'une des revendications 1 à 10,
**caractérisé en ce que** la liaison (23) de la pile (22) à combustible et de la réserve de gaz s'étend au moins partiellement sur un axe (3) de basculement entre l'unité (1) principale et l'unité (2) d'affichage.
